# EUROPÄISCHE PATENTSCHRIFT

(11) **EP 2 473 302 B1**
(45) Veröffentlichungstag und Bekanntmachung des Hinweises auf die Patenterteilung: **24.12.2014**
(21) Anmeldenummer: 10752287.2
(22) Anmeldetag: 29.07.2010
(51) Int. Cl.: B23B 31/28, B23Q 17/00

(54) **VERFAHREN ZUM EINSPANNEN EINES WERKZEUGS ODER EINES WERKSTÜCKS SOWIE VORRICHTUNG ZUR DURCHFÜHRUNG DES VERFAHRENS**
METHOD FOR CLAMPING A TOOL OR A WORKPIECE AND DEVICE FOR PERFORMING THE METHOD
PROCÉDÉ DE BLOCAGE D'UN OUTIL OU D'UNE PIÈCE, ET DISPOSITIF À CET EFFET

(30) Priorität: 02.10.2009 DE 102009044167
(43) Veröffentlichungstag der Anmeldung: 11.07.2012
(73) Patentinhaber: Röhm GmbH, 89567 Sontheim/Brenz (DE)
(72) Erfinder: HANGLEITER, Eugen, 89568 Hermaringen (DE); SCHENK, Peter, 89168 Niederstotzingen (DE)
(74) Vertreter: Hentrich, Swen
(86) Internationale Anmeldenummer: PCT/DE2010/075068
(87) Internationale Veröffentlichungsnummer: WO 2011/038730

(56) Entgegenhaltungen:
- WO-A1-2008/120692
- DE-A1-102006 050 918
- US-A- 4 567 794
- US-A1- 2008 073 862

## Beschreibung

Die Erfindung ist gebildet durch ein Verfahren gemäß Anspruch 1 zum Einspannen eines Werkzeugs oder eines Werkstücks mittels eines Elektrospanners, der ein an der Arbeitsspindel einer Werkzeugmaschine befestigtes Gehäuse, in dem axial verstellbar eine Gewindestange zur Verstellung der Spannbacken eines Spannfutters gelagert ist, und einen elektrischen Stellmotor umfaßt, dessen Rotor in Antriebsverbindung mit einem die Spindelmutter der Gewindestange verstellenden Antriebsrad steht, wobei der Gewindestange ein erster Sensor zur Erfassung von deren axialer Position und der Spindelmutter ein zweiter Sensor zur Erfassung von deren axialer Position zugeordnet ist, umfassend den Verfahrensschritt der Bestimmung der Position der Gewindestange mittels des erstens Sensors bei Auftreten einer leichten axialen Kraft infolge des Anliegens der Spannbacken an dem Werkzeug bzw. dem Werkstück, und fortgesetzter Verstellung der Spindelmutter, bis mittels des zweiten Sensors eine vorgegebene Geberdifferenz zwischen dem ersten Sensor und dem zweiten Sensor festgestellt ist, wobei der Spindelmutter beidseits angeordnete Federpakete zugeordnet sind, die bei der Erzeugung der vorgegebenen Geberdifferenz gespannt werden. Gegenstand der Erfindung ist weiterhin eine Vorrichtung zur Durchführung des vorstehend genannten Verfahrens.

Aus der DE 10 2006 050 918 A1 ist ein Elektrospanner bekannt, bei dem ein Elektromotor ausgenutzt wird, um das einer Werkzeugmaschine zugeordnete Spannfutter zu betätigen, also die Spannbacken zu verstellen. Die Anwendung des in der DE 10 2006 050 918 A1 offenbarten Elektrospanners in der Praxis ergab verbesserungswürdige Aspekte hinsichtlich der Hubsteuerung, da die analoge Längenmessung über den eingesetzten Sensor relativ ungenau ist. Desweiteren ist problematisch, dass für die Steuerung der erreichten Spannkraft das Motordrehmoment ausgenutzt wird, was gleichfalls mit einer relativ hohen Ungenauigkeit verbunden ist. Schließlich ist der Spannvorgang als zu langsam empfunden worden.

Ferner zeigt die Spannvorrichtung der US 4,567,794 ein Verfahren und eine Vorrichtung gemäß den Oberbegriffen der Ansprüche 1 und 5 mit einem Elektrospanner, bei dem eine Hohlwelle über die Verdrehung einer Mutter axial verstellbar ist, unter der Mitnahme von Spannbacken. Sobald die Spannbacken am Werkzeug oder Werkstück anliegen bzw. dieses ergreifen, erfolgt keine Axialverstellung der Hohlwelle mehr. Wird die Mutter nun weiter verdreht, so erfolgt eine Relativbewegung der Mutter bezüglich der Hohlwelle gegen die Kraft eines Elastomerringes.

Der Erfindung liegt daher die Aufgabe zugrunde, ein Verfahren anzugeben, mit dem die vorstehenden Probleme vermieden werden können oder das eine Alternative zu den bereits bekannten Verfahren darstellt. Die Aufgabe der Erfindung ist weiterhin, eine Vorrichtung zur Durchführung des erfindungsgemäßen Verfahrens bereitzustellen.

Der das Verfahren betreffende Teil der Aufgabe wird durch das eingangs genannte Verfahren gelöst. Mit diesem Verfahren ist der große Vorteil verbunden, dass nicht nur eine Drehmomentsteuerung für das Erreichen der Spannkraft eingesetzt werden muss, sondern eine wegabhängige Steuerung vorliegt, da eine fortgesetzte Verstellung der Gewindestange erfolgt, bis die vorgegebenen Geberdifferenz erreicht ist. Der Spannvorgang selber läuft schneller ab.

Ein weiterer Vorteil der Erfindung ist es, dass der Spindelmutter beidseits angeordnete Federpakete zugeordnet sind, die bei der Erzeugung der vorgegebenen Geberdifferenz gespannt werden. Denn dadurch wird eine Erhöhung der Spannsicherheit erreicht, da die Federpakete als Energiespeicher dienen und einer schnellen Lageänderung der Gewindestange entgegenwirken. Die beidseitige Anordnung der Federpakete bewirkt, dass die Gewindestange in beiden Richtungen die gleichen Eigenschaften aufweist.

Unter Sicherheitsaspekten ist es günstig, wenn während des gespannten Zustandes die Geberdifferenz überwacht wird, insbesondere wenn die Geberdifferenz als Regelgröße zur automatischen Erhaltung der Spannkraft genutzt wird, da so während der gesamten Dauer der Einspannung eines Werkstücks oder eines Werkzeuges eine Kontrolle des Spannzustandes unter Sicherheitsaspekten möglich ist. In diesem Zusammenhang bietet es sich dann an, dass eine Abweichung von der vorgegebenen Geberdifferenz dem Hubkontrollsystem gemeldet wird, dass bei Spannfuttern bekannt ist und genutzt werden kann, bei Abweichungen von einem sicheren Spannzustand, eine Meldung abzugeben oder sogar eine Abbremsung bis zum Stillstand des Spannfutters zu bewirken.

Der die Vorrichtung betreffenden Teil der Aufgabe wird gelöst durch eine Vorrichtung nach Anspruch 5, wobei ein Elektrospanner mit einem an der Arbeitsspindel einer Werkzeugmaschine befestigbaren Gehäuse vorgesehen ist, in dem eine axial verstellbare Gewindestange zur Verstellung der Spannbacken eines Spannfutters gelagert ist, die mittels einer Spindelmutter verstellbar ist, auf die ein elektrischer Stellmotor einwirkt, dessen Motor in Antriebsverbindung mit der Spindelmutter steht, dass die Spindelmutter axial zwischen zwei Federpaketen eingebettet ist, und dass der Gewindestange ein erster Sensor zur Positionserfassung und der Spindelmutter ein zweiter Sensor zur Positionserfassung zugeordnet ist. Diese Vorrichtung zeichnet sich durch ihren konstruktiv einfachen Aufbau auf, bei dem gegenüber dem bekannten Stand der Technik im wesentlichen nur die Federpakete sowie der zweite Sensor ergänzt werden müssen, dessen Signale herangezogen werden, um in Vergleich zu dem ersten Sensor die Geberdifferenz zu bestimmen.

Wiederum hinsichtlich der Einfachheit des Aufbaus ist es günstig, wenn die Spindelmutter über Mitnahmebolzen mit einem außen am Gehäuse geführten Schaltring verbunden ist, dem der zweite Sensor zugeordnet ist, da eine derartige Gestaltung es ermöglicht, die bei bekannten Hubkontrollsystemen gemachten Erfahrungen und Bauteile einzusetzen.

Es ist zu beachten, dass für die Kontrolle des Spannzustandes kein großer Verstellweg für die Spindelmutter innerhalb des Gehäuses bereitgehalten werden muss, also die Baulänge des Gehäuses im wesentlichen unverändert beibehalten werden kann, da es ausreichend ist, dass der Spindelmutter innerhalb des Gehäuses ein Verstellweg von 1,5 mm bis 5,0 mm, vorzugsweise von 2,0 bis 3,5 mm zugeordnet ist.

Der Platzbedarf für die erfindungsgemäße Vorrichtung lässt sich auch dadurch begrenzen, dass in der Spindelmutter Taschen für die Aufnahme der Federpakete ausgebildet sind, wobei die Taschen zugleich auch als Führung für die Federpakete dienen.

Im folgenden wird die Erfindung an einem in der Zeichnung dargestellten Ausführungsbeispiel näher erläutert; es zeigen:

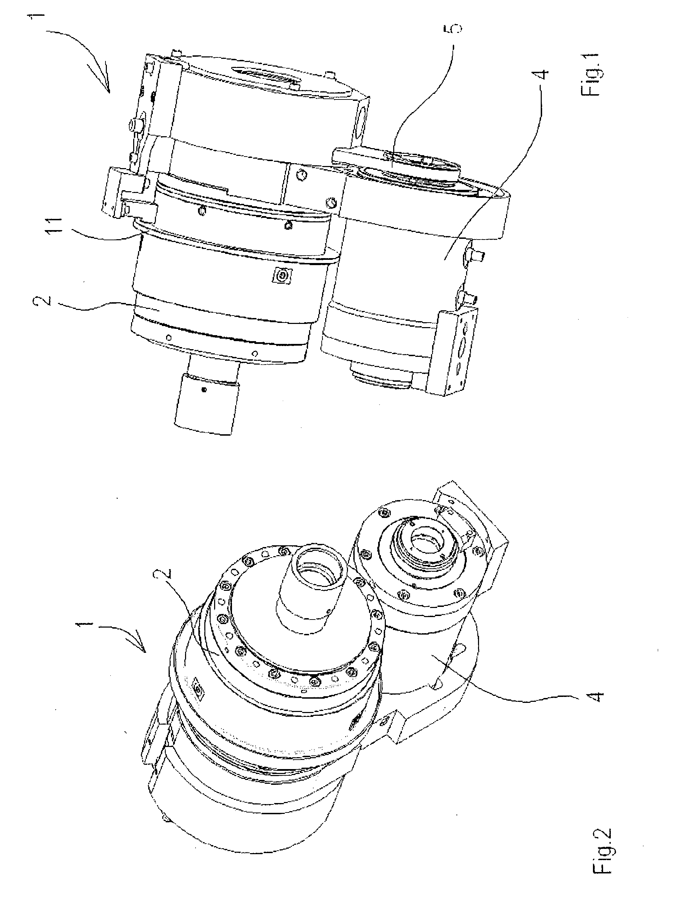

- Fig. 1: eine perspektivische Darstellung eines Elektrospanners mit dem die Gewindestange und die Spindelmutter aufnehmenden Gehäuse sowie den seitlich neben dem Gehäuse angeordneten Stellmotor,
- Fig. 2: eine perspektivische Darstellung des Elektrospanners aus Figur 1 aus anderer Sicht,

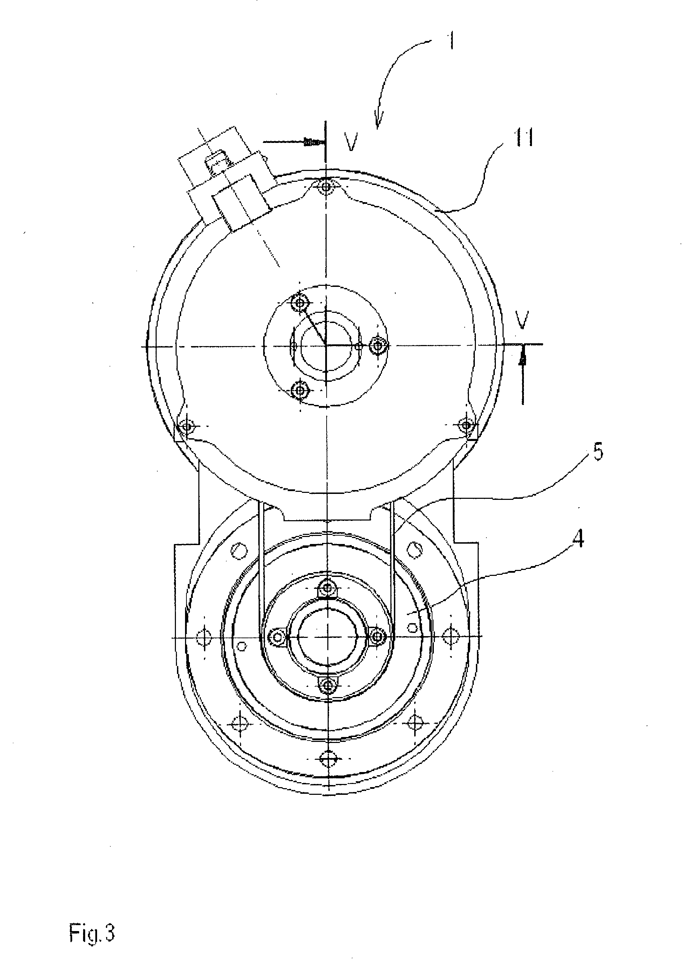

- Fig. 3: eine Stirnansicht des Elektrospanners aus Figur 1,

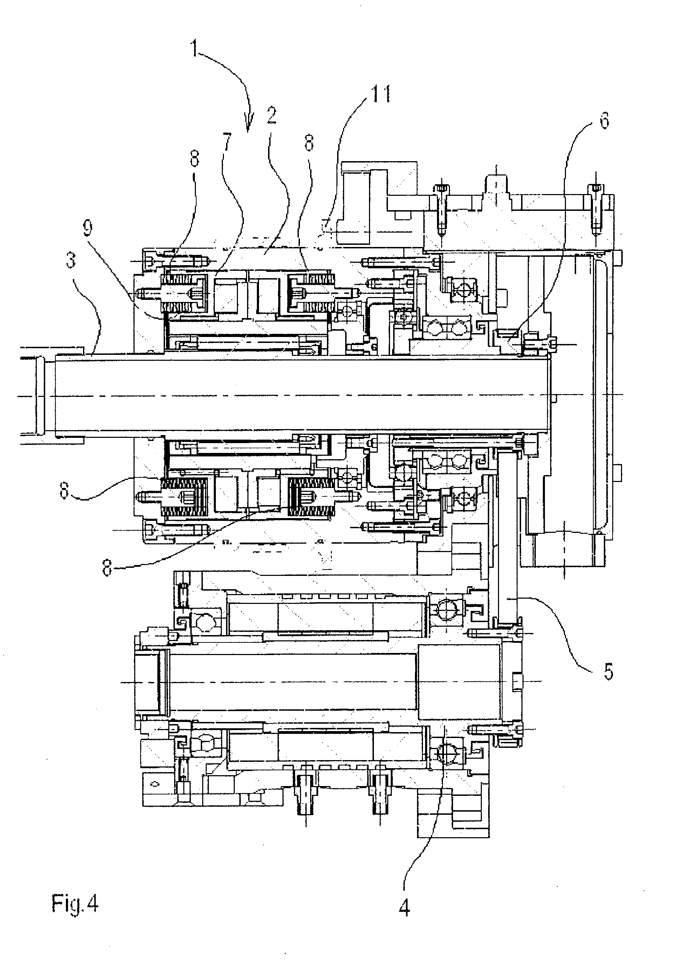

- Fig. 4: einen Längsschnitt durch den Elektrospanner aus Figur 1,

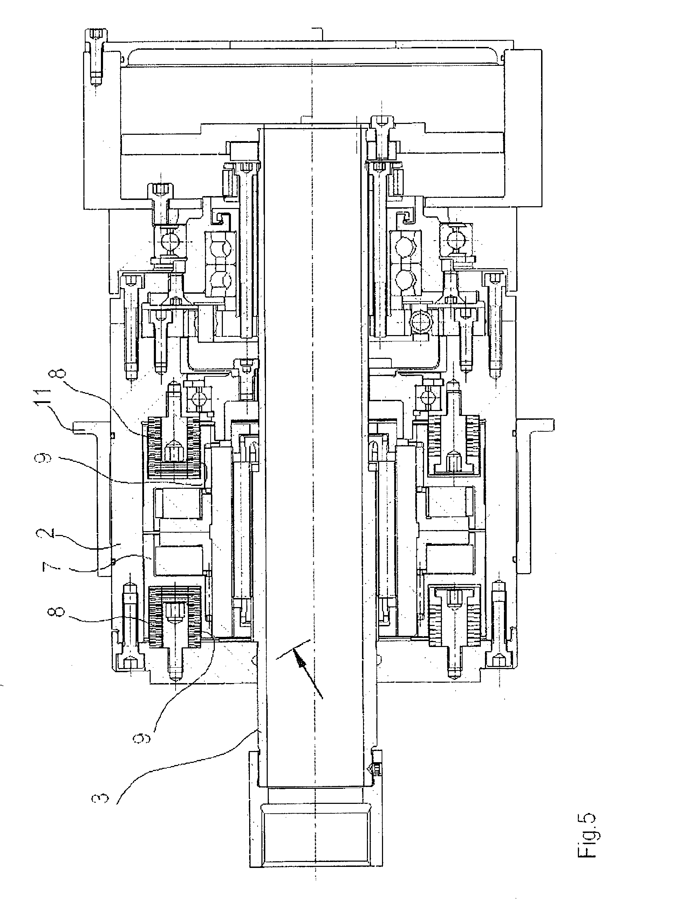

- Fig. 5: den Schnitt V - V aus Figur 3,

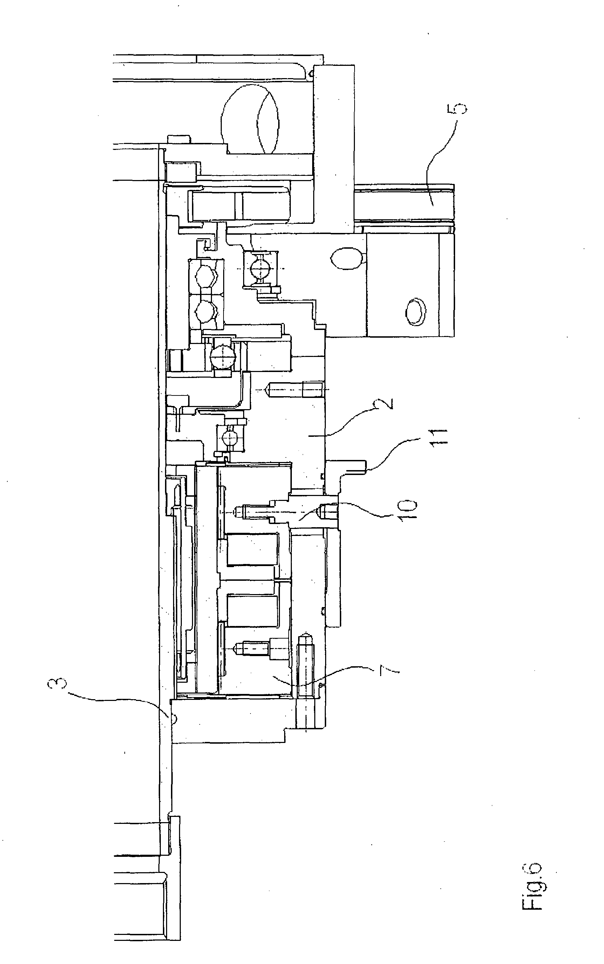

- Fig. 6: einen Längsschnitt durch die untere Hälfte des Gehäuses eines Elektrospanners mit gegenüber der Figur 5 verdrehter Schnittebene,
- Fig. 7: eine schematische Darstellung im Ruhezustand der Gewindestange und der Spindelmutter, und
- Fig. 8: eine der Figur 7 entsprechende schematische Darstellung zur Erläuterung der Geberdifferenz im gespannten Zustand des Elektrospanners.

In der Zeichnung ist ein Elektrospanner 1 dargestellt, der dazu benutzt wird, die Spannbacken eines an einer Werkzeugmaschine befestigten Spannfutters zu verstellen und während des Spannvorganges dauerhaft sicher gegenüber dem Werkstück oder Werkzeug zu spannen. Der Elektrospanner 1 weist ein an der Arbeitsspindel einer Werkzeugmaschine zu befestigendes Gehäuse 2 auf, in dem axial verstellbar eine Gewindestange 3 zur Verstellung der Spannbacken des Spannfutters gelagert ist. Der Elektrospanner 1 umfasst weiterhin einen elektrischen Stellmotor 4, der seitlich neben dem Gehäuse 2 angeordnet ist. Als Getriebe zwischen dem elektrischen Stellmotor 4 und der Gewindestange 3 ist ein Harmonic-Drive eingesetzt, wobei der Rotor des Stellmotors 4 über einen Riementrieb 5 mit einem Antriebsrad 6 verbunden ist, das mit dem Wellengenerator des Harmonic-Drive verbunden ist. Das Hohlrad des Harmonic-Drive ist mit dem Gehäuse 2 verbunden, während der Flex-Spine des Harmonic-Drive als Antrieb für die Gewindestange 3 vorgesehen ist. Bei dem in der Zeichnung dargestellten Ausführungsbeispiel erfolgt die Verstellung der Gewindestange 3 über die Vermittlung einer Spindelmutter 7, die axial zwischen zwei Federpaketen 8 eingebettet ist, die in Taschen 9 der Spindelmutter 7 eingesetzt sind, wobei mehrere gleichmäßig über den Umfang verteilt angeordnete Federpakete 8 eingesetzt werden können.

Die Spindelmutter 7 weist innerhalb des Gehäuses 2 einen Verstellweg von 2 x minimal 1,5 mm auf; weiterhin ist die Spindelmutter 7 über Mitnahmebolzen 10 mit einem außen am Gehäuse 2 geführten Schaltring 11 verbunden. Diesem Schaltring 11 ist ein zweiter Sensor zur Positionserfassung der Spindelmutter 7 und der Gewindestange 3 ein erster Sensor zur Positionserfassung zugeordnet.

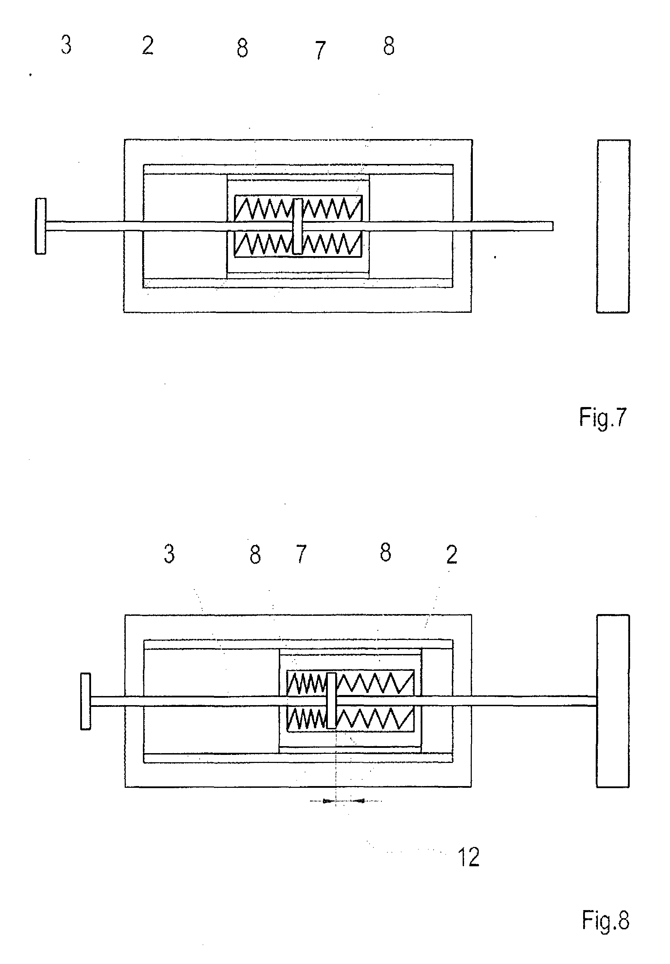

Mit einem derartigen Elektrospanner 1 ist es möglich, ein Werkstück oder Werkzeug in einfacher Weise einzuspannen, indem das Werkzeug bzw. Werkstück zwischen die Spannbacken des Spannfutters geführt und dann die Verstellung der Spannbacken initiiert wird durch den elektrischen Stellmotor 4, der die axiale Verstellung der Gewindestange 3 bewirkt. Figur 7 zeigt den Normalzustand des Elektrospanners 1, bei dem beide Sensoren die Ausgangsposition mit Geberdifferenz, Null liefern. Wenn sich die Spannbacken erstmals dem Werkzeug bzw. Werkstück anlegen, kommt es zu einer Erhöhung der erforderlichen Kraft für die fortgesetzte Verstellung der Gewindestange 3, so dass aus diesem Kraftanstieg auf das erstmalige Anliegen der Spannbacken an dem Werkzeug geschlossen und über den ersten Sensor die Position der Gewindestange 3 bestimmt werden kann. Das Vorliegen einer Geberdifferenz weist also darauf hin, dass etwas gespannt wird oder die Gewindestange 3 auf einen Widerstand trifft. Die Spindelmutter 7 wird während des Spannvorganges fortgesetzt verstellt, bis durch den zweiten Sensor eine in den Figuren 7 und 8 erläuterte Geberdifferenz 12 festgestellt werden kann, die aus der fortgesetzten Verstellung der Spindelmutter 7 durch den elektrischen Stellmotor 4 resultiert. Die Federpakete sind durch den fest umgebenen Weg auf die richtige Spannkraft vorgespannt. Bei dem erfindungsgemäßen Elektrospanner 1 ist damit die Ansteuerung für den Spannvorgang umgebaut von einer drehmomentabhängigen Steuerung auf eine wegabhängige Steuerung, bei der in bekannter Weise ein Weg ausgewertet werden kann, um das Vorliegen einer ausreichenden Spannung zu bewirken. Darüber hinaus steht auch während der gesamten Dauer des Spannzustandes die Geberdifferenz 12 bereit, die als Regelgröße zur automatischen Erhaltung der Spannkraft genutzt werden kann.

### Bezugszeichenliste

- 1: Elektrospanner
- 2: Gehäuse
- 3: Gewindestange
- 4: Stellmotor
- 5: Riemenantrieb
- 6: Antriebsrad
- 7: Spindelmutter
- 8: Federpaket
- 9: Tasche
- 10: Mitnahmebolzen
- 11: Schaltring
- 12: Geberdifferenz

## Patentansprüche

1. Verfahren zum Einspannen eines Werkzeugs oder eines Werkstücks mittels eines Elektrospanners (1), der ein an der Arbeitsspindel einer Werkzeugmaschine befestigtes Gehäuse (2), in dem axial verstellbar eine Gewindestange (3) zur Verstellung der Spannbacken eines Spannfutters gelagert ist, und einen elektrischen Stellmotor (4) umfaßt, dessen Rotor in Antriebsverbindung mit einem die Spindelmutter (7) der Gewindestange (3) verstellenden Antriebsrad (6) steht, wobei der Gewindestange (3) ein erster Sensor zur Erfassung von deren axialer Position und der Spindelmutter (7) ein zweiter Sensor zur Erfassung von deren axialer Position zugeordnet ist, umfassend den Verfahrensschritt der Bestimmung der Position der Gewindestange (3) mittels des erstens Sensors bei Auftreten einer leichten axialen Kraft infolge des Anliegens der Spannbacken an dem Werkzeug bzw. dem Werkstück, und fortgesetzter Verstellung der Spindelmutter (7), bis mittels des zweiten Sensors eine vorgegebene Geberdifferenz (12) zwischen dem ersten Sensor und dem zweiten Sensor festgestellt ist, **dadurch gekennzeichnet, dass** die Spindelmutter (7) axial zwischen zwei Federpaketen (8) eingebettet ist, die bei der Erzeugung der vorgegebenen Geberdifferenz (12) gespannt werden.

2. Verfahren nach Anspruch 1, **dadurch gekennzeichnet, dass** während des gespannten Zustands die Geberdifferenz (12) überwacht wird.

3. Verfahren nach Anspruch 2, **dadurch gekennzeichnet, dass** die Geberdifferenz (12) als Regelgröße zur automatischen Erhaltung der Spannkraft genutzt wird.

4. Verfahren nach Anspruch 2 oder 3, **dadurch gekennzeichnet, dass** eine Abweichung von der vorgegebenen Geberdifferenz (12) dem Hubkontrollsystem gemeldet wird.

5. Vorrichtung zur Durchführung des Verfahrens nach einem der Ansprüche 1 bis 4, beider ein Elektrospanner (1) mit einem an der Arbeitsspindel einer Werkzeugmaschine befestigbaren Gehäuse (2) vorgesehen ist, in dem eine axial verstellbare Gewindestange (3) zur Verstellung der Spannbacken eines Spannfutters gelagert ist, die mittels einer Spindelmutter (7) verstellbar ist, auf die ein elektrischer Stellmotor (4) einwirkt, dessen Rotor in Antriebsverbindung mit der Spindelmutter (7) steht und der Gewindestange (3) ein erster Sensor zur Positionserfassung und der Spindelmutter (7) ein zweiter Sensor zur Positionserfassung zugeordnet ist, **dadurch gekennzeichnet, dass** die Spindelmutter (7) axial zwischen zwei Federpaketen (8) eingebettet ist.

6. Vorrichtung nach Anspruch 5, **dadurch gekennzeichnet, dass** die Spindelmutter (7) über Mitnahmebolzen (10) mit einem außen am Gehäuse (2) geführten Schaltring (11) verbunden ist, dem der zweite Sensor zugeordnet ist.

7. Vorrichtung nach Anspruch 5 oder 6, **dadurch gekennzeichnet, dass** der Spindelmutter (7) innerhalb des Gehäuses (2) ein Verstellweg von 1,5 mm bis 5,0 mm, vorzugsweise von 2,0 mm bis 3,5 mm zugeordnet ist

8. Vorrichtung nach einem der Ansprüche 5 bis 7, **dadurch gekennzeichnet, dass** in der Spindelmutter (7) Taschen (9) für die Aufnahme der Federpakete (8) ausgebildet sind.

## Claims

1. A method of clamping a tool or a workpiece by means of an electric clamping device (1) which includes a housing (2) fixed to the working spindle of a machine tool and in which a threaded rod (3) is axially displaceably mounted for displacing the clamping jaws of a chuck, and an electric servomotor (4) whose rotor is drivingly connected to a drive wheel (6) for displacing the spindle nut (7) of the threaded rod (3), wherein associated with the threaded rod (3) is a first sensor for detecting the axial position of the threaded rod and associated with the spindle nut (7) is a second sensor for detecting the axial position of the spindle nut, including the method step of determining the position of the threaded rod (3) by means of the first sensor when a slight axial force occurs as a consequence of the clamping jaws bearing against the tool or the workpiece, and continued displacement of the spindle nut (7) until a predetermined sensor difference (12) is established between the first sensor and the second sensor by means of the second sensor, **characterised in that** the spindle nut (7) is axially embedded between two spring packs (8) which are clamped when the predetermined sensor difference (12) is produced,

2. A method according to claim 1 **characterised in that** the sensor difference (12) is monitored during the clamped condition.

3. A method according to claim 2 **characterised in that** the sensor difference (12) is used as a regulating parameter for automatically maintaining the clamping force.

4. A method according to claim 2 or claim 3 **characterised in that** a deviation from the predetermined sensor difference (12) is signalled to the stroke control system.

5. Apparatus for carrying out the method according to one of claims 1 to 4 in which there is provided an electric clamping device (1) having a housing (2) which can be fixed to the working spindle of a machine tool and in which an axially displaceable threaded rod (3) is mounted for displacement of the clamping jaws of a chuck, which rod is displaceable by means of a spindle nut (7) on which an electric servomotor (4) acts, the rotor thereof being drivingly connected to the spindle nut (7) and a first sensor for position detection is associated with the threaded rod (3) and a second sensor for position detection is associated with the spindle nut (7), **characterised in that** the spindle nut (7) is axially embedded between two spring packs (8).

6. Apparatus according to claim 5 **characterised in that** the spindle nut (7) is connected by way of entrainment pins (10) to a switching ring (11) which is guided externally on the housing (2) and with which the second sensor is associated.

7. Apparatus according to claim 5 or claim 6 **characterised in that** a displacement travel of 1.5 mm to 5,0 mm, preferably 2.0 mm to 3.5 mm is associated with the spindle nut (7) within the housing (2).

8. Apparatus according to one of claims 5 to 7 **characterised in that** pockets (9) for receiving the spring packs (8) are provided in the spindle nut (7).

## Revendications

1. Procédé de blocage d'un outil ou d'une pièce à usiner, au moyen d'un dispositif de serrage électrique (1) qui comprend un carter (2), qui est fixé sur la broche d'usinage d'une machine-outil et dans lequel une tige filetée (3), destinée au déplacement des mors d'un mandrin de serrage, est montée avec possibilité de déplacement axial, et un moteur d'actionnement (4) électrique dont le rotor est en liaison d'entraînement avec une roue d'entraînement (6) déplaçant l'écrou de vis (7) de la tige filetée (3), un premier capteur étant associé à la tige filetée (3) pour détecter la positon axiale de celle-ci, et un deuxième capteur étant associé à l'écrou de vis (7) pour détecter la position axiale de celui-ci, le procédé comprenant l'étape de détermination de la position de la tige filetée (3), au moyen du premier capteur, lors de l'apparition d'une légère force axiale suite à l'application des mors contre l'outil ou la pièce usiner, et de déplacement continu de l'écrou de vis (7) jusqu'à ce que l'on constate, au moyen du deuxième capteur, une différence de capteurs (12) prédéterminée entre le premier capteur et le deuxième capteur, **caractérisé en ce que** l'écrou de vis (7) est encastré axialement entre deux paquets de ressorts (8) qui sont tendus lors de la génération de la différence de capteurs (12) prédéterminée.

2. Procédé selon la revendication 1, **caractérisé en ce que** la différence de capteurs (12) est surveillée pendant l'état tendu.

3. Procédé selon la revendication 2, **caractérisé en ce que** la différence de capteurs (12) est utilisée comme grandeur réglant pour le maintien automatique de la force de tension.

4. Procédé selon la revendication 2 ou 3, **caractérisé en ce qu'**un écart par rapport à la différence de capteurs (12) prédéterminée est signalé au système de contrôle de course.

5. Dispositif de mise en oeuvre du procédé selon l'une des revendications 1 à 4, dans lequel il est prévu un dispositif de serrage électrique (1) avec un carter (2) qui peut être fixé sur la broche d'usinage d'une machine-outil et dans lequel est montée une tige filetée (3), pouvant être déplacée dans le sens axial, qui est destinée au déplacement des mors d'un mandrin de serrage et peut être déplacée au moyen d'un écrou de vis (7) sur lequel agit un moteur d'actionnement (4) électrique dont le rotor est en liaison d'entraînement avec l'écrou de vis (7), et un premier capteur est associé à la tige filetée (3) pour détecter la position, et un deuxième capteur est associé à l'écrou de vis (7) pour détecter la position, **caractérisé en ce que** l'écrou de vis (7) est encastré axialement entre deux paquets de ressorts (8).

6. Procédé selon la revendication 5, **caractérisé en ce que** l'écrou de vis (7) est relié par des broches d'entraînement (10) à une bague de manoeuvre (11) qui est guidée sur l'extérieur du carter (2) et à laquelle est associé le deuxième capteur.

7. Procédé selon la revendication 5 ou 6, **caractérisé en ce qu'**à l'intérieur du carter (2), une course de déplacement comprise entre 1,5 mm et 5,0 mm, de préférence entre 2,0 mm et 3,5 mm, est associée à l'écrou de vis (7).

8. Procédé selon l'une des revendications 5 à 7, **caractérisé en ce que** des logements (9), destinés à recevoir les paquets de ressorts (8), sont réalisés dans l'écrou de vis (7).
